# EUROPEAN PATENT APPLICATION

(11) **EP 4 804 661 A1**
(43) Date of publication of application: **09.09.2026**
(21) Application number: 23957386.8
(22) Date of filing: 03.11.2023
(51) Int. Cl.: H04W 64/00

(54) **WIRELESS COMMUNICATION METHOD AND COMMUNICATION DEVICE**

(71) Applicant: Quectel Wireless Solutions Co., Ltd., Shanghai 201601 (CN)
(72) Inventor: ZHAO, Zheng, Shanghai 201601 (CN)
(74) Representative: Fish & Richardson P.C.
(86) International application number: PCT/CN2023/129811
(87) International publication number: WO 2025/091530

(57) **Abstract**

Provided are a wireless communication method and a communication device. The method includes: a communication device determining a distance between a satellite and a terminal device based on a velocity of the satellite and a first RTT; where the first RTT is determined via a first positioning signal and a second positioning signal, where the first positioning signal is transmitted by the satellite to the terminal device, and the second positioning signal is transmitted by the terminal device to the satellite. The present application proposes that when calculating the distance between a satellite and a terminal device, not only the RTT but also the velocity of the satellite should be taken into account. In other words, the dynamic positional changes of both the satellite and the terminal device may be considered for calculation of the distance between the satellite and the terminal device, thereby achieving more accurate positioning of the terminal device.

## Description

### TECHNICAL FIELD

The present application relates to the technical field of communication, and more specifically, to a wireless communication method and a communication device.

### BACKGROUND

In communication systems, positioning for terminal devices can be achieved based on round trip time (RTT). In non-terrestrial network (NTN) systems, RTT between a satellite and a terminal device can be determined by transmitting uplink (UL) and downlink (DL) positioning signals. A communication device can determine a distance between the terminal device and the satellite based on RTT. Furthermore, the communication device can position the terminal device based on this distance. Compared to terrestrial network (TN) systems, there is still room for improvement in RTT-based positioning for NTN systems.

### SUMMARY

The present application provides a wireless communication method and a communication device. Various aspects involved in the present application are introduced in the following.

According to a first aspect of the present application, there is provided a wireless communication method. The method includes: a communication device determining a distance between a satellite and a terminal device based on a velocity of the satellite and a first RTT; where the first RTT is determined via a first positioning signal and a second positioning signal, where the first positioning signal is transmitted by the satellite to the terminal device, and the second positioning signal is transmitted by the terminal device to the satellite.

According to a second aspect of the present application, there is provided a communication device. The communication device includes: a determining unit, configured to determine a distance between a satellite and a terminal device based on a velocity of the satellite and a first RTT; where the first RTT is determined via a first positioning signal and a second positioning signal, where the first positioning signal is transmitted by the satellite to the terminal device, and the second positioning signal is transmitted by the terminal device to the satellite.

According to a third aspect of the present application, there is provided a communication device. The communication device includes a processor and a memory, where the memory is configured to store one or more computer programs, and the processor is configured to call the one or more computer programs in the memory to cause the communication device to perform some or all of the steps of the method according to the first aspect.

According to a fourth aspect of the present application, embodiments of the present application provide a communication system comprising the communication device according to the previous aspect. In another possible design, the system may further include other devices that interact with the communication device as provided in the embodiments of the present application.

According to a fifth aspect of the present application, the embodiments of the present application provide a computer-readable storage medium storing a computer program that causes a communication device to perform some or all of the steps of the method according to the above aspects.

According to a sixth aspect of the present application, the embodiments of the present application provide a computer program product, where the computer program product includes a non-transitory computer-readable storage medium storing a computer program, and the computer program is executable to cause a communication device to perform some or all of the steps of the method according to the above aspects. In some implementations, the computer program product may be a software installation package.

According to a seventh aspect of the present application, the embodiments of the present application provide a chip comprising a memory and a processor, where the processor is configured to call a computer program from the memory and execute the computer program to implement some or all of the steps of the method according to the above aspects.

The present application proposes that when calculating the distance between a satellite and a terminal device, not only the RTT but also the velocity of the satellite should be taken into account. In other words, the dynamic positional changes of both the satellite and the terminal device may be considered for calculation of the distance between the satellite and the terminal device, thereby achieving more accurate positioning of the terminal device.

### BRIEF DESCRIPTION OF THE DRAWINGS

Fig. 1 is a schematic diagram of a wireless communication system to which embodiments of the present application are applicable.
Fig. 2A is an exemplary diagram of a method for determining RTT.
Fig. 2B is an exemplary diagram of single-path delay.
Fig. 3 is an exemplary diagram of a multi-RTT-based positioning scenario.
Fig. 4 is a schematic flowchart of a wireless communication method provided by an embodiment of the present application.
Fig. 5 is another exemplary diagram of single-path delay.
Fig. 6 is a schematic diagram of the structure of a communication device provided by an embodiment of the present application.
Fig. 7 is a schematic diagram of the structure of an apparatus for communication provided by an embodiment of the present application.

### DETAILED DESCRIPTION OF THE EMBODIMENTS

The technical solutions herein are described below in conjunction with the accompanying drawings.

### Communication System

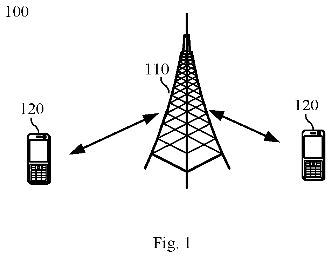

Fig. 1 shows a wireless communication system 100 to which the embodiments of the present application are applied. The wireless communication system 100 may include a communication device. The communication device may include a network device 110 and a terminal device 120. The network device 110 may be a device that communicates with the terminal device 120.

Fig. 1 illustrates one network device and two terminal devices by way of example. Optionally, the wireless communication system 100 may include multiple network devices and each network device's coverage area may include other numbers of terminal devices, which is not limited by the embodiments of the present application.

Optionally, the wireless communication system 100 may also include other network entities, such as network controllers and mobility management entities, which is not limited by the embodiments of the present application.

It should be understood that the technical solution of the embodiments of the present application can be applied to various communication systems, such as: the fifth generation (5G) system or new radio (NR), long term evolution (LTE) system, LTE frequency division duplex (FDD) system, LTE time division duplex (TDD), etc. The technical solution provided in the present application can also be applied to future communication systems, such as the sixth generation mobile communication system, satellite communication system, and so on.

The terminal device in the embodiments of the present application may also be referred to as user equipment (UE), access terminal, user unit, user station, mobile platform, mobile station (MS), mobile terminal (MT), remote station, remote terminal, mobile device, user terminal, terminal, wireless communication device, user agent or user device. The terminal device in the embodiments of the present application may refer to a device that provides voice and/or data connectivity to users, and can be configured to communicate people, objects, and machines, such as handheld devices and vehicle mounted devices with wireless connection functions. The terminal device in the embodiments of the present application may be mobile phones, tablets, laptops, palmtop computers, mobile internet devices (MID), wearable devices, virtual reality (VR) devices, augmented reality (AR) devices, wireless terminals in industrial control, wireless terminals in self-driving, wireless terminals in remote medical surgery, wireless terminals in smart grid, wireless terminals in transportation safety, wireless terminals in smart city, wireless terminals in smart home, etc. Optionally, UE can be configured to act as a base station. For example, UE may act as a scheduling entity that provides sidelink signals between UEs in vehicle-to-everything (V2X) or device to device (D2D) communication. For example, cellular phones and automobiles can communicate with each other using sidelink signals. Cellular phones can communicate with smart home devices without the need to relay communication signals through the base station.

The network device in the embodiments of the present application may be a device configured for communication with the terminal device. The network device may also include access network device. The access network device can provide communication coverage for specific geographic areas and can communicate with the terminal device 120 located within this coverage. The access network device may also be referred to as wireless access network device or base station. The access network device in the embodiments of the present application may refer to a radio access network (RAN) node (or device) that connects a terminal device to a radio network. The access network device may broadly cover or be replaced with the following various names, such as: NodeB, evolved NodeB (eNB), next generation NodeB (gNB), relay station, access point, transmitting and receiving point (TRP), transmitting point (TP), master eNB (MeNB), secondary eNB (SeNB), multi-standard radio (MSR) node, home base station, network controller, access node, wireless node, access point (AP), transmission node, transceiver node, base band unit (BBU), remote radio unit (RRU), active antenna unit (AAU), remote radio head (RRH), central unit (CU), distributed unit (DU), positioning node, etc. The base station may be a macro base station, a micro base station, a relay node, a donor node, or the like, or a combination thereof. The base station may also refer to a communication module, modem, or chip configured to be installed within the aforementioned equipment or devices. The base station may also be a device that performs base station functions in mobile switching centers, D2D communication, V2X communication, machine-to-machine (M2M) communication, a network side device in 6G network, or a device that performs base station functions in future communication systems. The base station can support networks of the same or different access technologies. The embodiments of the present application impose no limitation on the specific technology and device form adopted by the access network device.

The base station may be fixed or mobile. For example, a helicopters or drone can be configured to act as a mobile base station, and one or more cells can move according to the location of the mobile base station. In other examples, a helicopter or drone can be configured as a device for communication with another base station.

The communication devices involved in the wireless communication system may include not only access network devices and terminal devices, but also core network elements. A core network element can be implemented as a device, meaning the core network element is a core network device. It will be appreciated that the core network device may also be a network device.

The core network element in the embodiments of the present application may include a network element that processes and forwards signaling and data of users. For example, the core network device may include core access and mobility management function (AMF), session management function (SMF), user plane gateway, and location management function (LMF). The user plane gateway may be a server with functions such as mobility management, routing, and forwarding of user plane data, and is generally located on the network side, such as a serving gateway (SGW), a packet data network gateway (PGW), or a user plane function (UPF). Of course, other network elements may also be included in the core network, which are not listed here.

In some deployments, the network device in the embodiments of the present application may refer to CU or DU, or the network device includes CU and DU. gNB may also include AAU.

The network device and the terminal device may be deployed on land, including indoor or outdoor, handheld or vehicle mounted; may also be deployed on the water surface; and may also be deployed on airplanes, balloons, and satellites in the air. The embodiments of the present embodiment impose no limitation on the scenarios in which the network device and the terminal device are located.

It should be understood that all or part of the functions of the communication devices in the present application can also be implemented through functions of software running on hardware, or through virtualization functions instantiated on platforms (such as cloud platforms).

### NTN

NTN can provide communication services to users in a non-terrestrial manner. That is, communication with terminal devices can be achieved through non-terrestrial network devices such as satellites (SAT) and unmanned aerial system (UAS) platforms.

For terrestrial network communication, communication infrastructure cannot be deployed in scenarios such as oceans, mountains, and deserts. Alternatively, considering the construction and operation costs of communication infrastructure, terrestrial communication typically does not cover sparsely populated areas. Compared to terrestrial network communication, NTN has many advantages. First, NTN communication networks are not constrained by geographical limitations. Theoretically, as satellites orbit around the Earth, every corner of the Earth can be covered by satellite communication. Furthermore, the coverage area of non-terrestrial network devices is much larger than that of terrestrial communication devices. That is, an NTN cell can cover a larger area.

Since non-terrestrial network devices may move relative to the Earth, NTN cells may traverse across the Earth's surface. This phenomenon makes it challenging for the network device to reliably determine the location of the terminal device, or to identify the country where the terminal device is located, which may make it difficult for NTN to support regulatory services. Given this, relying solely on a global navigation satellite system (GNSS) report from the terminal device is insufficient. A hybrid approach combining the GNSS report with a network-based solution can enhance reliability. Consequently, network operators should cross-verify the terminal device's location using satellite-navigation-based GNSS location data reported by the terminal device in conjunction with other methods to meet potential regulatory requirements.

### Positioning technology

As communication technologies continue to advance, certain communication systems (e.g., 5G systems) can support more and more communication algorithms. These communication algorithms may involve high-rate information transmission and positioning technologies. For example, the NTN systems described above can achieve the positioning of terminal devices not only through GNSS, but also through communication algorithms to meet the requirements of the NTN systems.

Certain wireless communication systems may include servers. Calculation of the location coordinates of the terminal device may be performed in the server. Such servers may also be referred to as positioning servers.

A positioning server may be a network device with positioning capabilities provided by a network operator. The network device with positioning capabilities may be a core network device or a cloud server. For example, a positioning server described in the embodiments of the present application may include one or more of the following: a location management function (LMF), a location management component (LMC), or a local location management function (LLMF) residing within a network device. The embodiments of the present application do not impose limitations on these configurations.

RTT-based positioning technology is given priority in positioning technology due to its high accuracy and the advantage of not relying on timing synchronization between network devices and terminal devices. Below is an explanation of RTT-based positioning technology.

### RTT-based positioning

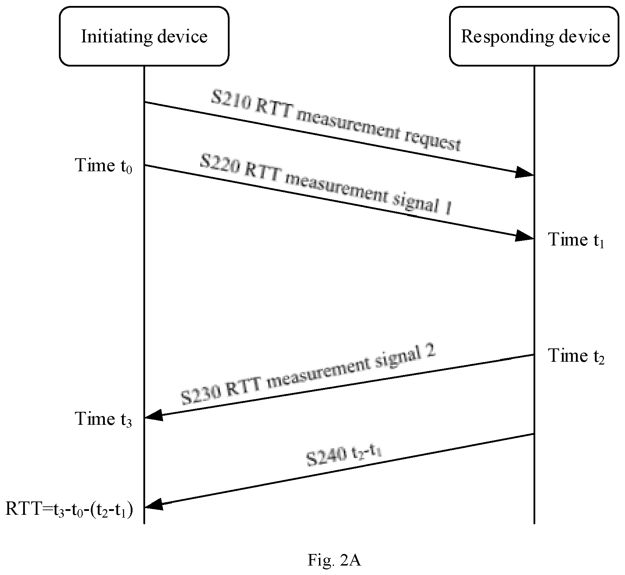

In a communication system, RTT-based positioning is determined based on UL and DL signals transmitted between network devices and terminal devices. These signals may be, for example, reference signals or pilot signals. Fig. 2A is an exemplary diagram of a method for determining RTT.

The method shown in Fig. 2A may be executed by an initiating device and a responding device. The responding device may be the device to be positioned. For instance, the responding device may be a terminal device, and the initiating device may be a network device. The network device may be an access network device.

The method shown in Fig. 2A includes steps S210 to S240.

In step S210, the initiating device transmits an RTT measurement request to the responding device.

In step s220, the initiating device transmits RTT measurement signal 1 to the responding device.

The initiating device transmits the RTT measurement signal 1 at time t₀. Due to transmission delay, the responding device receives the RTT measurement signal 1 at time t₁. That is, the time of arrival (TOA) of the RTT measurement signal 1 is t₁.

The RTT measurement signal 1 may include, for example, a DL positioning reference signal (PRS).

In step S230, the responding device transmits RTT measurement signal 2 to the initiating device.

The responding device transmits the RTT measurement signal 2 at time t₂. Due to transmission delay, the initiating device receives the RTT measurement signal 2 at time t₃. That is, the TOA of the RTT measurement signal 2 is t₃.

The RTT measurement signal 2 may include, for example, a sounding reference signal (SRS).

In scenarios where the initiating device is a network device, the time difference between time t₃ and time t₀ (i.e., t₃ - t₀) can be represented as the time difference between a receive time and a transmit time of the network device. The receive-transmit time difference of the network device may be denoted as gNB_{Rx-Tx}.

In some embodiments, gNB_{Rx-Tx} may satisfy: gNB_{Rx-Tx}=T_{gNB-RX}-T_{gNB-TX}. T_{gNB-RX} represents a receive timing of a transmission reference point (TRP, or abbreviated as reference point) for an uplink subframe #i which contains the SRS associated with the terminal device, and is defined by the first detected temporal path. T_{gNB-TX} represents a transmit timing of the TRP for a downlink subframe #j, temporally closest to the reception of subframe #i from the terminal device. Multiple SRS resources may be used to determine the start of the subframe containing the SRS.

In step S240, the responding device transmits the time difference between time t₂ and time t₁ (i.e., t₂ - t₁) to the initiating device via an RTT report. In scenarios where the responding device is a terminal device, the time difference between time t₂ and time t₁ can be represented as the time difference between a receive time and a transmit time of the terminal device. The receive-transmit time difference of the terminal device may be denoted as UE_{Tx-Rx}.

In some embodiments, UE_{Tx-Rx} may satisfy: UE_{Tx-Rx}=T_{UE-TX}-T_{UE-RX}. T_{UE-RX} represents a reception timing of the terminal device for a downlink subframe #i received from a transmission point (TP), and is defined by the first detected temporal path. T_{UE-TX} represents a transmission timing of the terminal device for an uplink subframe #j, temporally closest to the reception of the downlink subframe #i from the TP. Multiple DL PRS or channel state information reference signals (CSI-RS) may be used to determine this subframe.

Based on time t₀, time t₃, and the received time difference (t₂ - t₁), the RTT can be calculated. For example, the RTT may satisfy: RTT=t₃-t₀-(t₂-t₁). Alternatively, the RTT may be obtained based on UE_{Tx-Rx} and gNB_{Rx-Tx}. That is, the RTT may satisfy: RTT=gNB_{Rx-Tx}-UE_{Tx-Rx}.

For example, the terminal device may transmit an RTT report to the positioning server. The RTT report may include UE_{Tx-Rx} measured for at least one network device. The network device may transmit an RTT report to the positioning server. The RTT report may include gNB_{Rx-Tx}. The positioning server may determine the RTT using the formula: RTT= gNB_{Rx-Tx} - UE_{Tx-Rx}. The RTT report may also be referred to as measurement report.

In a communication system, prior to step S210, the positioning server may transmit PRS configuration information to the terminal device, so as to indicate DL PRS configurations associated with different network devices. The positioning server may also indicate SRS information to the terminal device, enabling the terminal device to transmit UL PRS based on the SRS information for measurements by network devices.

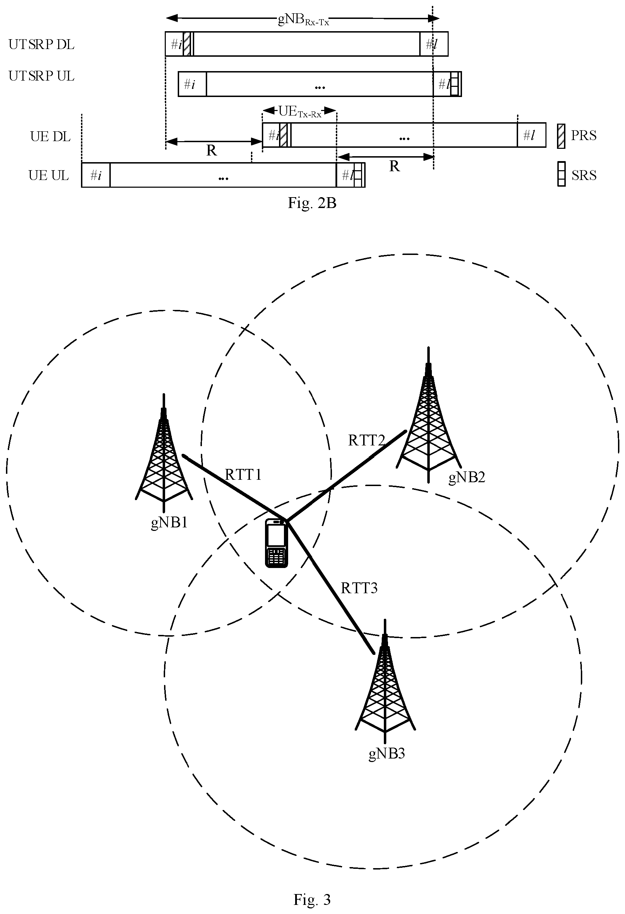

After the RTT is obtained, the single-path delay can be derived. For example, the single-path delay R may satisfy: R = (gNB_{Rx-Tx} - UE_{Tx-Rx})/2. As illustrated in Fig. 2B, the time difference between gNB_{Rx-Tx} and UE_{Tx-Rx} equals twice the single-path delay R.

The distance d between the network device and the terminal device may satisfy: d=R × c. c represents the speed of light.

Based on the calculated distance between the network device and the terminal device, the terminal device's location can be determined.

For example, the RTT-based positioning technology can achieve positioning using multiple RTT. For instance, in a communication system, multiple RTT between network devices and the terminal device may be measured. Based on these multiple RTT, the distances between the terminal device and respective network devices can be determined, enabling the calculation of the terminal device's location.

As illustrated in Fig. 3, positioning of the terminal device can be achieved using three network devices. In Fig. 3, the three network devices are labeled as gNB1, gNB2, and gNB3. The distances from the terminal device to respective gNBs can be calculated based on RTT1 (between gNB1 and the terminal device), RTT2 (between gNB2 and the terminal device), and RTT3 (between gNB3 and the terminal device), thereby determining the location of the terminal device.

It should be noted that Fig. 3 serves merely as an example, and positioning of the terminal device may be achieved alternatively using other quantities of network devices.

### RTT-based Positioning in NTN

Taking non-terrestrial network devices being satellites as an example, multi-RTT-based positioning may be categorized into two types: single-satellite multi-RTT and multi-satellite multi-RTT.

Single-satellite multi-RTT conducts multiple measurements at different times by leveraging the motion of a single satellite (e.g., a low earth orbit (LEO) satellite), and further derives distances between the terminal device and multiple reference points of the single satellite, enabling determination of the location of the terminal device.

Multi-satellite multi-RTT conducts measurements across multiple satellites within a short time period, and further derives distances between the terminal device and multiple satellites, enabling determination of the location of the terminal device.

Unlike terrestrial communication, non-terrestrial network devices in NTN scenarios may move at high velocities. For example, an LEO satellite may move at an extremely high velocity (e.g., 7.6 km/s). Consequently, RTT-based positioning in NTN possibly encounters anomalies due to the high-speed motion of non-terrestrial network devices.

For example, due to the high-speed motion of the satellite, the delay between the satellite and the terminal device may dynamically change, potentially degrading the performance of communication link and further the accuracy of RTT-based positioning. For example, timing drift (or temporal drift) of downlink service links becomes a notable factor in RTT-based positioning in NTN scenarios. For another example, due to the high-speed motion of the satellite, the duration of DL subframes received by the terminal or UL subframes received by the satellite may dynamically change (shorten or expand).

Doppler frequency shift may cause temporal drift. Doppler frequency shift refers to a change in frequency caused by the linear motion of either the wave source or the receiver relative to the observer. Such frequency change affects the phase and temporal characteristics of the signal. When a signal undergoes Doppler frequency shift, its frequency changes, which in turn causes a change in phase of the signal. For example, in NTN systems, when a satellite moves toward a terminal device, the wavelength of the received signal shortens, leading to an increase in frequency. Conversely, when the satellite moves away from the terminal device, the wavelength lengthens, resulting in a decrease in frequency. This demonstrates that Doppler frequency shift causes a mismatch between the phase of the received signal and its original transmission phase, thereby resulting in temporal drift. This demonstrates that temporal drift may be caused by phase change rather than actual clock drift. The signal receiver may perform compensation to correct timing drift caused by Doppler frequency shift experienced by the signal. This capability is critical in applications requiring high-precision time and phase synchronization, such as satellite communications, radar systems, and satellite navigation systems.

For scenarios involving low-speed relative movement between the terminal device and the network device (compared to the relative movement between the terminal device and the satellite), such as a terminal device on a high-speed train traveling at 300 km/h, a propagation distance of 300km (assuming a subframe duration of 1ms, the signal would travel by 300km within this duration) of one subframe would require approximately one hour of travel time. In such cases, the receive-transmit time difference is much shorter than one hour. In contrast, for satellites, typical data for satellite operation is: the satellite runs at a speed of 7.5km/s at an altitude of 750km. Assuming that a subframe duration is 1ms, within this 1ms, a propagation distance of the signal is 300km, and a displacement of the satellite is 7.5km. Therefore, when the satellite moves along the connection line with the terminal device, it moves across a propagation distance corresponding to one subframe in 40 seconds.

To address these challenges, the present application proposes integrating the impact of movement speed of non-terrestrial network devices into RTT-based positioning technology, thereby achieving more accurate positioning.

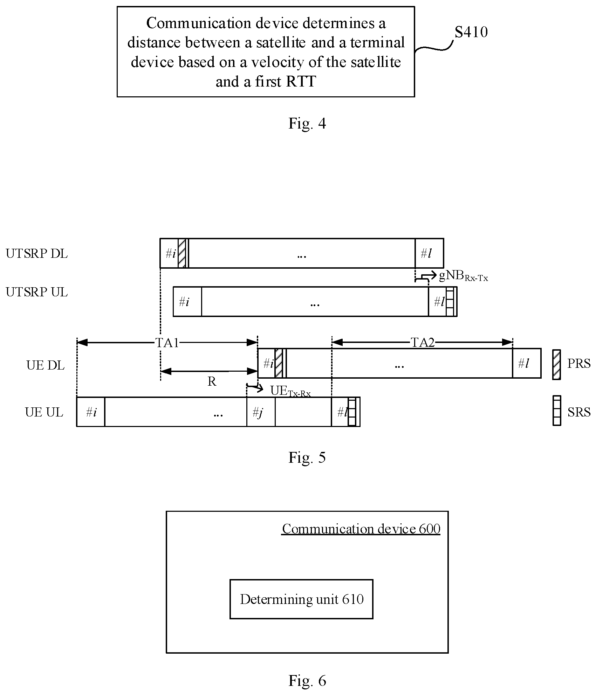

Fig. 4 is a schematic flowchart of a wireless communication method provided by an embodiment of the present application. The method shown in Fig. 4 may be executed by a communication device. The communication device may include one or more of the following: terminal device, network device, and positioning server. The network device may include non-terrestrial network device (e.g., satellite).

The method shown in Fig. 4 includes step S410.

In step S410, the communication device determines a distance between a satellite and a terminal device based on a velocity of the satellite and a first RTT.

The first RTT may be determined via a first positioning signal and a second positioning signal. The first positioning signal may be transmitted by the satellite to the terminal device, and the second positioning signal may be transmitted by the terminal device to the satellite. For example, the first positioning signal may be PRS. The second positioning signal may be SRS.

For example, the first RTT may be determined via a first time difference and a second time difference. The time difference between the time when the satellite receives the second positioning signal and the time when the satellite transmits the first positioning signal may be defined as the first time difference. That is to say, the first time difference may be gNB_{Rx-Tx} as described above. The time difference between the time when the terminal device transmits the second positioning signal and the time when the terminal device receives the first positioning signal may be defined as the second time difference. That is to say, the second time difference may be UE_{Tx-Rx} as described above.

Optionally, the distance between the satellite and the terminal device can be directly represented by the absolute distance between the satellite and the terminal device, or by the relative displacement (i.e., the movement distance within the first RTT) of the satellite to the terminal device within the time corresponding to the receive-transmit time difference.

For RTT-based positioning in NTN, the present application proposes that when calculating the distance between a satellite and a terminal device, not only the RTT but also the velocity of the satellite should be taken into account. In other words, the dynamic positional changes of both the satellite and the terminal device may be considered for calculation of the distance between the satellite and the terminal device, thereby achieving more accurate positioning of the terminal device. For example, by taking the satellite's velocity into account, Doppler frequency shift effects can be compensated, so that an accurate positioning measurement result can be obtained based on the first positioning signal and/or the second positioning signal, thereby ensuring performance and accuracy of positioning.

When the satellite's velocity is taken into account, RTT-based positioning in NTN can be achieved by using the positioning technology of terrestrial communication in related technologies, so that the RTT-based positioning in NTN can achieve high-precision positioning effect with minimal modifications to related technologies.

In some embodiments, the cell where the terminal device is located may include a reference point. The reference point may be any point within the cell. For example, the reference point may be: the geometric centroid of the cell or a pre-surveyed point of the cell. The velocity of the satellite may include a first velocity component along a connection line between the satellite and the reference point. That is to say, the first velocity component may be a component of the satellite's velocity on the connection line. The distance between the satellite and the terminal device can be determined based on the first velocity component.

It will be appreciated that a satellite generally maintains a certain altitude to orbit around the Earth based on its trajectory. The first velocity component can reflect the speed at which the satellite approaches or moves away. Therefore, using the first velocity component to calculate the distance between the terminal device and the satellite make the calculation result more accurate.

In some embodiments, the first velocity component may be determined based on an angle between the direction of movement (or direction of motion) of the satellite and the connection line. The connection line refers to the connection line between the terminal device and the satellite as described above. Based on this angle, the satellite's velocity can be projected onto the direction of the connection line, thus obtaining the first velocity component.

In some embodiments, the direction of movement of the satellite and/or the direction of the connection line can be determined based on the satellite's ephemeris information.

In some embodiments, the distance d between the satellite and the terminal device may satisfy: d=R × (c + v). R represents the single-path delay. c represents the speed of light. v represents the first velocity component. R can be determined based on the first RTT. For example, R is half of the first RTT.

It will be appreciated that when calculating the distance d, a reference point is selected. If the distance between the reference point and the terminal device is significant, the computed distance d cannot accurately reflect the true distance between the terminal device and the satellite. Therefore, the present application proposes a method for correcting the distance d to obtain a weighted distance. The weighted distance can more accurately reflect the true distance between the terminal device and the satellite.

For example, a first position of the terminal device can be obtained based on the distance d. The velocity of the satellite may include a second velocity component along a connection line between the first position and the satellite. The connection line between the first position and the satellite may be referred to as second connection line. The second velocity component may be determined based on an angle between the direction of movement of the satellite and the second connection line. A weighted distance d2 between the satellite and the terminal device may satisfy: d2=R × (c + v2); R represents the single-path delay and is determined based on the first RTT. c represents the speed of light. v2 represents the second velocity component.

The position of the terminal device can be recalculated using the weighted distance to obtain more accurate location information.

As a possible implementation, the communication device may execute the following steps to determine the distance between the terminal device and the satellite.

In step 1, the communication device determines the motion direction of the satellite based on its ephemeris data. The communication device can also determine the direction of the connection line between the terminal device and the satellite using the satellite's ephemeris information. Based on the direction of the connection line and the motion direction, the communication device can determine the angle between the motion direction of the satellite and the direction of the connection line.

In step 2, the communication device computes the velocity component (first velocity component) of the satellite along the connection line based on the direction and velocity of the satellite's movement, as well as the angle calculated in step 1.

In step 3, the communication device calculates the relative displacement of the satellite relative to the terminal device within the time corresponding to the receive-transmit time difference based on the velocity component of the satellite along the connection line and the receive-transmit time difference.

In some embodiments, the first RTT may be determined based on the receive-transmit time difference of the terminal device and the receive-transmit time difference of the satellite.

In some embodiments, the first RTT may be determined based on the timing advance (TA).

As shown in Fig. 5, when the terminal device reports its receive-transmit time difference, it uses the uplink subframe timing as the reference. However, the actual reception time of the first signal is determined with the subframe header being determined based on the downlink subframe timing. As shown by TA1 in Fig. 5, the TA1 proposed in the present application may be expressed as the sum of an integer number of subframes and a fractional subframe component. That is to say, TA satisfies n * tₛ+t_{0_UE}. n represents an integer. ts represents the duration of a subframe. t_{0_UE} represents the residual time component except for the n full subframes in TA. As can be seen from Fig. 5, t_{0_UE} equals to UE_{Tx-Rx}.

If ignoring the n full subframes, the uplink timing is advanced by t_{0_UE} relative to the downlink timing. The terminal device reports the time difference specified in the TN system rather than the actual receive-transmit time difference. That is, the terminal device reports the index offset between the uplink subframe j and the downlink subframe i used for the positioning pilot. The uplink subframe j is temporally closest to the downlink subframe i, used for the positioning pilot, received from the TP. As shown in Fig. 5, the downlink subframe i is the subframe in which the terminal device receives the downlink pilot transmitted by the UTSRP; and the uplink subframe j is the subframe temporally closest to subframe i, but no uplink pilot is transmitted in this uplink subframe.

Thus, the receive-transmit time difference UE_{Tx-Rx} reported by the terminal device, as marked in FIG. 5, can be inferred from the TA information. In other words, the TA information can reflect UE_{Tx-Rx}. That is to say, the TA information contains the information of t_{0_UE}. The network device can obtain UE_{Tx-Rx} from the TA information. Therefore, the terminal device can avoid explicitly transmitting UE_{Tx-Rx} to the network device, thereby reducing the power and resources consumed by transmitting UE_{Tx-Rx}.

It should be noted that the technical solution of determining UE_{Tx-Rx} through the TA information and/or terminal device not reporting UE_{Tx-Rx} can be applied to both TN and NTN systems. The present application imposes no restrictions on deployment scenarios.

In some embodiments, the terminal device may receive first configuration information transmitted by the network device. The first configuration information is used for indicating the terminal device whether to report the second time difference. The first configuration information can be used to configure whether the terminal device reports UE_{Tx-Rx}.

It will be appreciated that based on the first configuration information, the present application is compatible with the technical solution of the terminal device explicitly reporting UE_{Tx-Rx} in related technologies.

It should be noted that the present application imposes no limitation on the method of transmitting the first configuration information. For example, the network device may transmit the first configuration information through broadcasting.

In some embodiments, the first configuration information may be applicable to all terminal devices in the entire cell. That is to say, all terminal devices in the cell can use the same configuration.

In some embodiments, the network device may configure different first configuration information for different terminal devices. For example, the first configuration information may be configured based on the first information of the terminal device. The first information may include one or more of the following information of the terminal device: positioning service level, power consumption, and energy reserve. For example, the first configuration information may indicate: when the positioning service level of the terminal device is high, the terminal device needs to report UE_{Tx-Rx} to achieve more accurate positioning. For another example, the first configuration information may indicate: when the current power consumption of the terminal device is high, the terminal device does not need to report UE_{Tx-Rx} to avoid an increase in power consumption of the terminal device. For another example, the first configuration information may indicate: when the power reserve of the terminal device is low, the terminal device does not need to report UE_{Tx-Rx} to avoid rapid power consumption.

The positioning server can receive TA information of the terminal device. The TA information of the terminal device may be transmitted by the terminal device or by other network devices to the positioning server.

The TA information may include one or more of TA value, whether TA has been adjusted, and TA adjustment amount.

It should be noted that in NTN systems, the TA of the terminal device changes rapidly over time. Therefore, in NTN systems, the TA information of the terminal device needs to be promptly reported to the positioning server for accurate positioning by the positioning server.

In some embodiments, the access network device determines the TA information of the terminal device and notifies the TA information to the terminal device. Alternatively, the terminal equipment may determine the TA information by itself and report the TA information to the access network device. Under such circumstances, if the positioning server and the access network device are deployed separately, the positioning server may communicate with the access network to obtain the TA information of the terminal device. For example, when the positioning server is ground-based, it can readily communicate with terrestrial access network devices to obtain the TA information of the terminal device. If the positioning server is co-located within the access network device, the positioning server can inherently access the TA information of the terminal device without external coordination.

In some embodiments, the TA information of the terminal device is adjusted or determined by the terminal device itself. For example, the terminal device can adjust TA on its own by measuring the downlink pilot. Under such circumstances, the terminal device needs to report TA information to the network device or positioning server after each TA adjustment. After receiving the TA information, the network device may transmit the TA information to the positioning server.

In some cases, the corresponding uplink TA when the terminal device receives the first positioning signal and the corresponding uplink TA when the terminal device transmits the second positioning signal may have different values. For example, in NTN systems, due to the high-speed movement of the satellite, the distance between the satellite and the terminal device is constantly changing. In order to maintain uplink synchronization, TA has to be updated frequently, so that the above situation may occur. Referring further to Fig. 5, TA1 represent the TA when the terminal device receives the first positioning signal, and TA2 represents the TA when the terminal device transmits the second positioning signal. TA1 and TA2 may be different.

In some embodiments, the device that transmits TA information can transmit timing points, nodes, or time periods at which TA adjustments occur. In this way, the positioning server can obtain the TA corresponding to the transmission of the first positioning signal. In some embodiments, nodes available for TA adjustment may satisfy one or more of the following: network device-configured, pre-configured, preset values, and protocol-specified. For example, the device that transmits TA information may report TA information within a first duration before the adjustment node.

It should be noted that the first duration may satisfy one or more of the following: network device-configured, pre-configured, preset values, and protocol-specified. Given the latency of satellite transmission, the first duration may be long enough. For example, the first duration may be defined in seconds (s). The first duration may, for example, be 2 seconds. Alternatively, the first duration may be adjusted to tens of milliseconds (ms) relative to uplink.

In some embodiments, the device that transmits TA information may report TA information only prior to TA adjustment. When the terminal device does not adjust TA, the terminal device may not transmit TA information. In this way, the positioning server can obtain the TA corresponding to the transmission of the first positioning signal.

In some embodiments, the TA value may remain unchanged (i.e., no TA adjustments occur) during a first time period. The first time period may include: a transmission time period of the first positioning signal and/or a transmission time period of the second positioning signal. That is to say, TA adjustment time can be staggered from the transmission time of the first positioning signal and/or the second positioning signal.

In some embodiments, the network device may compute the transmission time period of the first positioning signal based on the altitude and/or ephemeris information of the satellite. For example, during location computation, the positioning server may determine the approximate time when the terminal device receives the first positioning signal. For example, the time when the satellite transmits the first positioning signal is tₛ, and the satellite is 750 km above the Earth. The propagation time of the first positioning signal is much less than 1 second. It can be assumed that the TA remains constant during the transmission window of the first positioning signal.

In some embodiments, the TA adjustment time may be protocol-specified. The protocol-specified TA adjustment time allows PRS transmission time and TA adjustment time to be staggered. The positioning server can obtain TA information based on the recorded TA value and PRS transmission time.

In some embodiments, the TA corresponding to the transmission time period of the first positioning signal is defined as first TA, and the TA corresponding to the transmission time period of the second positioning signal is defined as second TA. The time difference (i.e. UE_{Tx-Rx}) between the time when the terminal device transmits the second signal and the time when the terminal device receives the first signal can be determined based on the first TA and/or the second TA. For example, UE_{Tx-Rx} can be determined based on the difference between the first TA and the second TA. Referring further to Fig. 5, UE_{Tx-Rx} can be determined based on the difference between TA1 and TA2.

The preceding sections have detailed the method embodiments of the present application. The device embodiments of the present application are described in detail below. It should be understood that the description of the embodiments of method corresponds to the description of the embodiments of device. Therefore, the parts not described in detail can refer to the previous embodiments of method.

Fig. 6 is a schematic diagram of the structure of a communication device 600 provided in the embodiments of the present application. The communication device 600 includes a determining unit 610.

The determining unit 610 is configured to determine a distance between a satellite and a terminal device based on a velocity of the satellite and a first RTT; where the first RTT is determined via a first positioning signal and a second positioning signal, where the first positioning signal is transmitted by the satellite to the terminal device, and the second positioning signal is transmitted by the terminal device to the satellite.

In some embodiments, the cell where the terminal device is located includes a reference point. The velocity of the satellite includes a first velocity component along a connection line between the satellite and the reference point. The distance between the satellite and the terminal device can be determined based on the first velocity component.

In some embodiments, the first velocity component can be determined based on an angle between the direction of movement of the satellite and the connection line.

In some embodiments, the direction of movement of the satellite and/or the direction of the connection line can be determined based on the ephemeris information.

In some embodiments, the distance d between the satellite and the terminal device satisfies: d=R × (c +v); where R represents the single-path delay and is determined based on the first RTT, c represents the speed of light, and v represents the first velocity component.

In some embodiments, a first position of the terminal device can be obtained based on the distance d, the velocity of the satellite includes a second velocity component along a connection line between the first position and the satellite, and a weighted distance d2 between the satellite and the terminal device satisfies: d2=R × (c + v2); where R represents the single-path delay and is determined based on the first RTT, c represents the speed of light, and v2 represents the second velocity component.

In some embodiments, the first RTT is determined via TA.

In some embodiments, the TA value remains unchanged during the first time period, and the first time period includes: a transmission time period of the first positioning signal and/or a transmission time period of the second positioning signal.

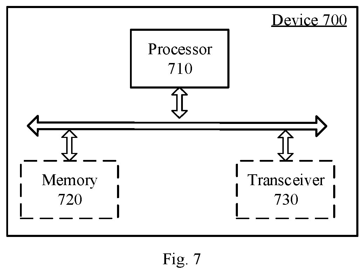

In an optional embodiment, the determining unit 610 may be implemented as a processor 710. The communication device 600 may further include a memory 720 and a transceiver 730, as specifically shown in Fig. 7.

Fig. 7 is a schematic diagram of the structure of a communication device provided by an embodiment of the present application. The dashed line in Fig. 7 indicates that the unit or module is optional. The device 700 can be configured to implement the method described in the above method embodiments. The device 700 may be a chip, terminal device, or network device.

The device 700 may include one or more processors 710. The processor 710 can support the device 700 to implement the method described in the previous method embodiments. The processor 710 may be a general-purpose processor or a dedicated processor. For example, the processor may be a central processing unit (CPU). Alternatively, the processor may also be other general-purpose processor, digital signal processor (DSP), application specific integrated circuits (ASIC), field programmable gate array (FPGA) or other programmable logic device, discrete gate or transistor logic device, discrete hardware component, etc. The general-purpose processor may be a microprocessor or any conventional processor.

The device 700 may also include one or more memories 720. The memory 720 stores a program that can be executed by the processor 710, enabling the processor 710 to perform the method described in the previous method embodiments. The memory 720 may be independent of the processor 710 or integrated into the processor 710.

The device 700 may also include a transceiver 730. The processor 710 may communicate with other devices or chips through the transceiver 730. For example, the processor 710 can exchange data with other devices or chips through the transceiver 730.

The embodiments of the present application also provide a computer-readable storage medium for storing a program. The computer-readable storage medium can be applied to the communication device provided in the embodiments of the present application, and the program stored therein enables the computer to execute the method executable by the communication device in the embodiments of the present application.

The embodiments of the present application also provide a computer program product. The computer program product includes a program. The computer program product can be applied to the communication device provided in the embodiments of the present application, and the program included therein enables the computer to execute the method executable by the communication device in the embodiments of the present application.

The embodiments of the present application also provide a computer program. The computer program can be applied to the communication device provided in the embodiments of the present application, and enables the computer to execute the method executable by the communication device in the embodiments of the present application.

It should be understood that the terms "system" and "network" in the present application can be used interchangeably. In addition, the terms used in the present application are only for explaining the specific embodiments of the present application, and are not intended to limit the present application. The terms "first," "second," "third," and "fourth" used in the specification, claims, and accompanying drawings of the present application are intended to distinguish different objects and not to describe a specific order. In addition, the terms "include" and "have", as well as any variations thereof, are intended to cover nonexclusive inclusions.

In the embodiments of the present application, the term "indication" may be a direct indication, an indirect indication, or a representation of an associated relationship. For example, A indicates B, which may mean that A directly indicates B. For example, B can be obtained through A; which may also mean that A indirectly indicates B, for example, A indicates C, and B can be obtained through C; which may also mean that there is a correlation between A and B.

In the embodiments of the present application, "B corresponding to A" indicates that B is associated with A, and B can be determined according to A. But it should also be understood that determining B according to A does not mean determining B solely according to A, but mean that B can be determined according to A and/or other information.

In the embodiments of the present application, the term "corresponding" may indicate a direct or indirect correspondence relationship between two objects, an association relationship between the two objects, or a relationship of indicating and being indicated, configuring and being configured.

In the embodiments of the present application, "being pre-defined" or "being pre-configured" can be implemented by pre-storing corresponding codes or tables in devices (for example, including terminal devices and network devices) or other ways that can be used for indicating relevant information. The specific implementation method therefor is not limited in the present application. For example, being pre-defined may refer to being defined in a protocol.

In the embodiments of the present application, the term "protocol" may refer to standard protocols in the field of communication, such as LTE protocol, NR protocol, and related protocols applied in future communication systems, which is not limited in the present application.

The term "and/or" in the embodiments of the present application only describes the association relationship between related objects, indicating that there may exist three types of relationships. For example, A and/or B may cover the following three situations: A exists alone, A and B exist simultaneously, and B exists alone. In addition, the character "/" in this paper generally indicates that the related objects before and after the "/" are in an "or" relationship.

In the embodiments of the present application, the term "include" may refer to direct or indirect inclusion. Optionally, the term "include" mentioned in the embodiments of the present application can be replaced with "indicate" or "be used for determining". For example, A includes B, which can be replaced with A indicates B, or A is used for determining B.

In the embodiments of the present application, the sequence numbers of the above processes do not imply the order of execution and should not constitute any limitation on the implementation process of the embodiments of the present application. The order of execution of each process should be determined by its function and internal logic.

In the several embodiments provided in the present application, it should be understood that the disclosed systems, devices, and methods can be implemented in other ways. For example, the device embodiments described above are only illustrative. For example, the division of units is only a division in accordance with logical function. In practical implementation, there may be other division methods. For example, multiple units or components may be combined or integrated into another system, or some features may be ignored or not executed. On the other hand, the mutual coupling or direct coupling or communication connection shown or discussed may be indirect coupling or communication connection through some interfaces, devices or units, which can be electrical, mechanical or in other forms.

The units described as separate components may or may not be physically separated, and the components shown as units may or may not be physical units, i.e., these components may be located in one place or distributed across multiple network units. Some or all of the units can be selected according to actual needs to achieve the purpose of the embodiments.

In addition, the functional units in various embodiments of the present application may be integrated into one processing unit, may physically exist separately, or, two or more of the functional units may be integrated into one unit.

In the above embodiments, the functional units can be fully or partially implemented through software, hardware, firmware, or any combination thereof. When implemented using software, the units can be fully or partially implemented in the form of a computer program product. The computer program product includes one or more computer instructions. When loading and executing the computer program instructions in a computer, all or part of the processes or functions described in the embodiments of the present application are generated. The computer may be a general-purpose computer, a dedicated computer, a computer network, or other programmable device. The computer instructions may be stored in a computer-readable storage medium or transmitted from one computer-readable storage medium to another. For example, the computer instructions may be transmitted from a website site, computer, server, or data center to another website site, computer, server, or data center via wired (such as coaxial cable, fiber optic, digital subscriber line (DSL)) or wireless (such as infrared, wireless, microwave, etc.) means. The computer-readable storage medium can be any available medium that a computer can read, or a data storage device such as a server or data center that integrates one or more available media. The available medium may be magnetic medium (such as floppy disk, hard disk, magnetic tape), optical medium (such as digital video disc (DVD)), or semiconductor medium (such as solid state disk (SSD)).

The above only describes specific implementation of the present application, but the scope of protection of the present application is not limited thereto. Any skilled person familiar with the technical field can easily conceive changes or replacements within the technical scope disclosed by the present application. These changes or replacements should be covered in the scope of protection of the present application. Therefore, the scope of protection of the present application shall be subject to the scope of protection of the appended claims.

## Claims

1. A wireless communication method, comprising:
determining, by a communication device, a distance between a satellite and a terminal device based on a velocity of the satellite and a first round trip time (RTT);
wherein the first RTT is determined via a first positioning signal and a second positioning signal, wherein the first positioning signal is transmitted by the satellite to the terminal device, and the second positioning signal is transmitted by the terminal device to the satellite.

2. The method according to claim 1, wherein a cell where the terminal device is located comprises a reference point, the velocity of the satellite comprises a first velocity component along a connection line between the satellite and the reference point, and the distance between the satellite and the terminal device is determined based on the first velocity component.

3. The method according to claim 2, wherein the first velocity component is determined based on an angle between a direction of movement of the satellite and the connection line.

4. The method according to claim 3, wherein the direction of movement of the satellite and/or a direction of the connection line is determined based on ephemeris information.

5. The method according to any one of claims 2 to 4, wherein the distance d between the satellite and the terminal device satisfies: d=R × (c + v); wherein R represents a single-path delay and is determined based on the first RTT, c represents a speed of light, and v represents the first velocity component.

6. The method according to claim 5, wherein a first position of the terminal device is obtained based on the distance d, the velocity of the satellite comprises a second velocity component along a connection line between the first position and the satellite, and a weighted distance d2 between the satellite and the terminal device satisfies: d2=R × (c + v2); wherein R represents the single-path delay and is determined based on the first RTT, c represents the speed of light, and v2 represents the second velocity component.

7. The method according to any one of claims 1 to 6, wherein the first RTT is determined via timing advance (TA).

8. The method according to claim 7, wherein TA value remains unchanged during a first time period, and the first time period comprises: a transmission time period of the first positioning signal and/or a transmission time period of the second positioning signal.

9. A communication device, comprising:
a determining unit, configured to determine a distance between a satellite and a terminal device based on a velocity of the satellite and a first RTT;
wherein the first RTT is determined via a first positioning signal and a second positioning signal, wherein the first positioning signal is transmitted by the satellite to the terminal device, and the second positioning signal is transmitted by the terminal device to the satellite.

10. The communication device according to claim 9, wherein a cell where the terminal device is located comprises a reference point, the velocity of the satellite comprises a first velocity component along a connection line between the satellite and the reference point, and the distance between the satellite and the terminal device is determined based on the first velocity component.

11. The communication device according to claim 10, wherein the first velocity component is determined based on an angle between a direction of movement of the satellite and the connection line.

12. The communication device according to claim 11, wherein the direction of movement of the satellite and/or a direction of the connection line is determined based on ephemeris information.

13. The communication device according to any one of claims 10 to 12, wherein the distance d between the satellite and the terminal device satisfies: d=R × (c + v); wherein R represents a single-path delay and is determined based on the first RTT, c represents a speed of light, and v represents the first velocity component.

14. The communication device according to claim 13, wherein a first position of the terminal device is obtained based on the distance d, the velocity of the satellite comprises a second velocity component along a connection line between the first position and the satellite, and a weighted distance d2 between the satellite and the terminal device satisfies: d2=R × (c + v2); wherein R represents the single-path delay and is determined based on the first RTT, c represents the speed of light, and v2 represents the second velocity component.

15. The communication device according to any one of claims 9 to 14, wherein the first RTT is determined via timing advance (TA).

16. The communication device according to claim 15, wherein TA value remains unchanged during a first time period, and the first time period comprises: a transmission time period of the first positioning signal and/or a transmission time period of the second positioning signal.

17. A communication device, comprising a memory and a processor, wherein the memory is configured to store a program, and the processor is configured to call the program in the memory to cause the communication device to implement the method according to any one of claims 1 to 8.

18. A device, comprising a processor configured to call a program from a memory to cause the device to implement the method according to any one of claims 1 to 8.

19. A chip, comprising a processor configured to call a program from a memory to cause a device installed with the chip to implement the method according to any one of claims 1 to 8.

20. A computer-readable storage medium, wherein a program is stored thereon, and the program causes a computer to implement the method according to any one of claims 1 to 8.

21. A computer program product, comprising a program, wherein the program causes a computer to implement the method according to any one of claims 1 to 8.

22. A computer program, wherein the computer program causes a computer to implement the method according to any one of claims 1 to 8.
